# EUROPEAN PATENT SPECIFICATION

(11) **EP 1 954 736 B1**
(45) Date of publication and mention of the grant of the patent: **27.11.2013**
(21) Application number: 06838815.6
(22) Date of filing: 01.12.2006
(51) Int. Cl.: C08G 18/70, C09D 175/04

(54) **NON-AQUEOUS, LIQUID COATING COMPOSITIONS**
NICHTWÄSSRIGE FLÜSSIGBESCHICHTUNGSZUSAMMENSETZUNGEN
COMPOSITIONS DE REVETEMENT LIQUIDES, NON AQUEUSES

(30) Priority: 02.12.2005 US 741571 P
(43) Date of publication of application: 13.08.2008
(73) Proprietor: Coatings Foreign IP Co. LLC, Wilmington, DE 19801 (US)
(72) Inventor: FLOSBACH, Carmen, 42287 Wuppertal (DE); LEY, Olaf, 42329 Wuppertal (DE); RENKES, Tanja, 45239 Essen (DE)
(74) Representative: Maiwald Patentanwalts GmbH
(86) International application number: PCT/US2006/046054
(87) International publication number: WO 2007/064921

(56) References cited:
- EP-A- 0 162 364
- EP-A- 0 431 414
- EP-A- 1 122 273

## Description

### Field of the Invention

The invention relates to novel non-aqueous, liquid coating compositions which contain binders that are cross-linkable by polyisocyanate and polyisocyanate cross-linking agents.

### Description of the Prior Art

Non-aqueous, liquid coating compositions based on binders cross-linkable by polyisocyanate, in particular hydroxyl-functional binders, and polyisocyanate cross-linking agents are known. Examples are corresponding two-component coating systems based on hydroxyl-functional acrylic resins (c.f. European Coatings Handbook, Curt R. Vincentz Verlag, Hannover, 2000, page 66).

EP 0 162 364 discloses a composition that can be used for coating comprising a binder with groups reactive with isocyanate, an amine stabilized, solid dimeric 2,4-TDI and an IPDI. The composition starts reacting at a temperature of 94° C and is further cured at 120° C.

EP 0 431 414 deals with heat curable liquid compositions comprising solid polyisocyanates with melting points above 80° C, a liquid polyether with a MW of 400 to 6000 and polyester that are solid at room temperature having a MW of between 400 and 20.000.

It has now been found that the per se known non-aqueous, liquid coating compositions based on binders cross-linkable by polyisocyanate, in particular hydroxyl-functional binders, and polyisocyanate cross-linking agents may be improved if they additionally contain, apart from the hitherto conventional polyisocyanate cross-linking agents, a specific kind of isocyanate-functional polyurethane resins. In this way, it is, for example, possible to achieve a higher solids content of the coating composition (even at an identical or slightly higher application viscosity), improved sagging properties (even at elevated temperatures), extended potlife and improved technological properties, in particular, good stone chip resistance and good scratch resistance, of the coating layers produced with the coating compositions.

### Summary of the Invention

The invention is directed to non-aqueous, liquid coating compositions which contain at least one polyisocyanate A, at least one isocyanate-functional polyurethane resin B differing from the at least one polyisocyanate A and at least one binder C with groups reactive towards the isocyanate groups of A and B, wherein the at least one polyisocyanate A is not solid at room temperature and/or is present in dissolved form and wherein the at least one polyurethane resin B is present as particles having a melting temperature of 40 to 180°C, in particular, 60 to 160°C.

### Detailed Description of the Embodiments

The phrase "groups reactive towards isocyanate groups" used in the present description and in the claims in particular means "groups capable of addition with isocyanate groups".

The coating compositions according to the invention are liquid, contain organic solvent(s) inert towards isocyanate groups and have a solids content of, for example, 40 to 85 wt.%, preferably of 45 to 75 wt.%.

The solids content of the coating compositions according to the invention consists of the resin solids content and the following optional components: pigments, fillers (extenders) and non-volatile additives.

The resin solids content of the coating compositions according to the invention comprises the isocyanate-functional components A and B and the binder solids content comprising the at least one binder C. In particular, the resin solids content of the coating compositions according to the invention consists of 20 to 70, preferably 20 to 50 wt.% of the isocyanate component consisting of components A and B, 30 to 80, preferably 50 to 80 wt.% of the at least one binder C and 0 to 30 wt.% of one or more components D, wherein the weight percentages add up to 100 wt.%. It is preferred, that the resin solids content does not comprise any component(s) D and that it consists of 20 to 70, preferably 20 to 50 wt.% of the isocyanate component consisting of the components A and B and 30 to 80 wt.%, preferably 50 to 80 wt.% of the binder solids content consisting of one or more binders C, wherein the weight percentages add up to 100 wt.%.

The isocyanate component consists of more than 0 to 90 wt.%, for example, 40 to 90 wt.%, preferably 40 to 80 wt.%, of the at least one polyisocyanate A and 10 to less than 100, for example, 10 to 60 wt.%, preferably 20 to 60 wt.%, of the at least one isocyanate-functional polyurethane resin B, wherein the weight percentages add up to 100 wt.%. The molar ratio between the isocyanate groups from the at least one polyisocyanate A and the isocyanate groups from the at least one isocyanate-functional polyurethane resin B in the coating composition according to the invention is, for example, 30 : 1 to 0.5 :1.

The at least one polyisocyanate A comprises polyisocyanates which are not solid at room temperature but are, for example, liquid, and/or are soluble in an organic solvent (mixture) which is inert towards isocyanate groups. Polyisocyanates A soluble in an organic solvent (mixture) which is inert towards isocyanate groups are present in dissolved form in the coating compositions containing organic solvent(s) which is/are inert towards isocyanate groups. Examples of polyisocyanates A are conventional polyisocyanates known to the person skilled in the art, such as, di- and/or polyisocyanates with aliphatically, cycloaliphatically, araliphatically and/or aromatically attached isocyanate groups. The isocyanate content of the polyisocyanates A is in general in a range from 2 to 33.6 wt.%, preferably, from 5 to 25 wt.% (calculated as NCO):

Examples of type A diisocyanates are hexamethylene diisocyanate, tetramethylxylylene diisocyanate, isophorone diisocyanate, dicyclohexylmethane diisocyanate, cyclohexane diisocyanate, toluylene diisocyanate, and diphenylmethane diisocyanate.

Examples of type A polyisocyanates are those which contain heteroatoms in the residue linking the isocyanate groups. Examples of these are polyisocyanates which comprise carbodiimide groups, allophanate groups, isocyanurate groups, urethane groups, acylated urea groups or biuret groups. The polyisocyanates have an isocyanate functionality higher than 2, such as, for example, polyisocyanates of the uretidione or isocyanurate type produced by di- and/or trimerization of the diisocyanates stated in the above paragraph. Further examples are polyisocyanates containing biuret groups produced by reaction of the diisocyanates stated in the above paragraph with water. Further examples are likewise polyisocyanates containing urethane groups produced by reaction with polyols and which differ from the at least one isocyanate-functional polyurethane resin B. The type A polyisocyanates containing urethane groups produced by reaction with polyols differ from type B isocyanate-functional polyurethane resins with regard to the melting and/or solubility behavior thereof, for example, 1) they do not exhibit melting temperatures determinable by means of DSC (differential scanning calorimetry) or have melting temperatures of below 40°C and/or 2) they are present in dissolved form in the coating compositions according to the invention containing organic solvent(s) which is/are inert towards isocyanate groups.

Polyisocyanate crosslinking agents known for isocyanate-curing coating systems and based on hexamethylene diisocyanate, on isophorone diisocyanate and/or on dicyclohexylmethane diisocyanate are very highly suitable as polyisocyanates A. Examples are the per se known derivatives of these diisocyanate comprising biuret, urethane, uretidione and/or isocyanurate groups. Examples thereof may be found among the products known by the name Desmodur® sold by Bayer Material Science.

The polyurethane resins B are isocyanate-functional resins, which are present in the coating compositions according to the invention as particles, in particular with a non-spherical shape, and have a melting temperature of 40 to 180°C, in particular 60 to 160°C. The melting temperatures are not in general sharp melting points, but instead the upper end of melting ranges with a breadth of, for example, 30 to 150°C. The melting ranges and thus the melting temperatures may be determined, for example, by DSC at heating rates of 10 K/min. The polyurethane resins B have isocyanate contents of, for example, 2 to 13.4 wt.-% (calculated, as NCO, molar mass 42).

The polyurethane resins B are insoluble or virtually insoluble in the coating compositions and are present therein as particles. The polyurethane resins B are only very slightly, if at all, soluble in organic solvents conventional in coatings, the solubility amounting, for example, to less than 10, in particular less than 5 g per litre of butyl acetate at 20°C.

The production of isocyanate-functional polyurethane resins is known to the person skilled in the art; in particular, they may be produced by reacting polyol(s) with polyisocyanate(s) in the excess. Polyols suitable for the production of the polyurethane resins B are not only polyols in the form of low molar mass compounds defined by empirical and structural formula but also oligomeric or polymeric polyols with number-average molar masses of, for example, up to 800, for example, corresponding hydroxyl-functional polyethers, polyesters or polycarbonates; low molar mass polyols defined by an empirical and structural formula are, however, preferred. The person skilled in the art selects the nature and proportion of the polyisocyanates and polyols for the production of polyurethane resins B in such a manner that polyurethane resins B with the above-mentioned melting temperatures and the above-mentioned solubility behavior are obtained.

All the number-average molar mass data stated in the present description are number-average molar masses determined or to be determined by gel permeation chromatography (GPC; divinylbenzene-crosslinked polystyrene as the immobile phase, tetrahydrofuran as the liquid phase, polystyrene standards).

The isocyanate-functional polyurethane resins B may be produced in the presence of organic solvents inert towards isocyanate groups, which, however, makes it necessary to isolate the polyurethane resins B obtained in this manner or remove the solvent therefrom. Preferably, the production of the polyurethane resins B is, however, carried out without solvent and without subsequent purification operations.

In a first preferred embodiment, the polyurethane resins B are polyurethane diisocyanates which can be prepared by reacting 1,6-hexane diisocyanate with a diol component in the molar ratio (x+1) : x, wherein x means any desired value from 2 to 6, preferably, from 2 to 4, and the diol component is one single diol, in particular, one single (cyclo) aliphatic diol with a molar mass in the range of 62 to 600, or a combination of diols, preferably two to four, in particular two or three diols, wherein in the case of a diol combination each of the diols preferably constitutes at least 10 mol % of the diols of the diol component.. ln the case of a diol combination, it is preferred, that at least 70 mol %, in particular, 100 mol % of the diols are (cyclo)aliphatic diols, each with a molar mass in the range of 62 to 600.

The term "(cyclo)aliphatic" used in the present description and the claims encompasses cycloaliphatic, linear aliphatic, branched aliphatic and cycloaliphatic with aliphatic residues. Diols differing from (cyclo)aliphatic diols accordingly comprise aromatic or araliphatic diols with aromatically and/or aliphatically attached hydroxyl groups. One example is bisphenol A. Diols differing from (cyclo)aliphatic diols may furthermore comprise oligomeric or polymeric diols with number-average molar masses of, for example, up to 800, for example, corresponding polyether, polyester or polycarbonate diols.

The production of the polyurethane diisocyanates can be carried out in the presence of organic solvent inert towards isocyanate groups, followed by isolation of the polyurethane diisocyanates so prepared. Preferably, the production of the polyurethane diisocyanates is carried out without solvent and without subsequent purification operations.

1,6-hexane diisocyanate and the diol component are reacted stoichiometrically with one another in the molar ratio (x+1) mol 1,6-hexane diisocyanate : x mol diol, wherein x means any desired value from 2 to 6, preferably from 2 to 4.

One single diol, in particular, one single (cyclo)aliphatic diol with a molar mass in the range of 62 to 600 is used as the diol component. It is also possible to use a combination of diols, preferably two to four, in particular two or three diols, wherein each of the diols preferably constitutes at least 10 mol % of the diols of the diol component and wherein it is further preferred, that at least 70 mol %, in particular 100 mol % of the diols are (cyclo)aliphatic diols, each with a molar mass in the range of 62 to 600.

In the case of the diol combination, the diol component may be introduced as a mixture of its constituent diols or the diols constituting the diol component may be introduced individually into the synthesis. It is also possible to introduce a proportion of the diols as a mixture and to introduce the remaining proportion(s) in the form of pure diol.

Examples of diols which are possible as one single diol of the diol component are ethylene glycol, the isomeric propane- and butanediols, 1,5-pentanediol, 1,6-hexanediol, 1,10-decanediol, 1,12-dodecanediol, 1,4-cyclohexanedimethanol, hydrogenated bisphenol A and dimer fatty alcohol.

Examples of diols which are possible as constituent of the diol component are telechelic (meth)acrylic polymer diols, polyester diols, polyether diols., polycarbonate diols, each with a number-average molar mass of, for example, up to 800 as representatives of oligomeric or polymeric diols, bisphenol A as a representative of low molar mass non-(cyclo)aliphatic diols defined by empirical and structural formula and ethylene glycol, the isomeric propane- and butanediols, 1,5-pentanediol, 1,6-hexanediol, 1,10-decanediol, 1,12-dodecanediol, neopentyl glycol, butylethylpropanediol, the isomeric cyclohexanediols, the isomeric cyclohexanedimethanols, hydrogenated bisphenol A, tricyclodecanedimethanol, and dimer fatty alcohol as representatives of (cyclo)aliphatic diols defined by empirical and structural formula with a low molar mass in the range of 62 to 600.

1,6-hexane diisocyanate and the diol component are preferably reacted together in the absence of solvents. The reactants may here all be reacted together simultaneously or in two or more synthesis stages. When the synthesis is performed in multiple stages, the reactants may be added in the most varied order, for example, also in succession or in alternating manner. The diol component may, for example, be divided into two or more portions or into individual diols, for example, such that 1,6-hexane diisocyanate,is initially reacted with part of the diol component before further reaction with the remaining proportion of the diol component. The individual reactants may in each case be added in their entirety or in two or more portions. The reaction is exothermic and proceeds at a temperature above the melting temperature of the reaction mixture. The reaction temperature is, for example, 60 to 200°C. The rate of addition or quantity of reactants added is accordingly determined on the basis of the degree of exothermy and the liquid (molten) reaction mixture may be maintained within the desired temperature range by heating or cooling.

Once the reaction carried out in the absence of solvent is complete and the reaction mixture has cooled, solid polyurethane diisocyanates are obtained. When low molar mass diols defined by empirical and structural formula are used for synthesis of the polyurethane diisocyanates, their calculated molar masses are in the range of 628 or above, for example, up to 2300.

The polyurethane diisocyanates assume the form of a mixture exhibiting a molar mass distribution. The polyurethane diisocyanates do not, however, require working up and may be used directly as isocyanate-functional polyurethane resins B.

In a second preferred embodiment, the polyurethane resins B are polyurethane diisocyanates which can be prepared by reacting a diisocyanate component and a diol component in the molar ratio (x+1) : x, wherein x means any desired value from 2 to 6, preferably, from 2 to 4, wherein 50 to 80 mol % of the diisocyanate component is formed by 1,6-hexane diisocyanate, and 20 to 50 mol % by one or two diisocyanates, each forming at least 10 mol % of the diisocyanate component and being selected from the group consisting of toluylene diisocyanate, diphenylmethane diisocyanate, dicyclohexylmethane diisocyanate, isophorone diisocyanate, trimethylhexane diisocyanate, cyclohexane diisocyanate, cyclohexanedimethylene diisocyanate and tetramethylenexylylene diisocyanate, wherein the mol % of the respective diisocyanates add up to 100 mol %, wherein 20 to 100 mol % of the diol component is formed by at least one linear aliphatic alpha, omega-C2-C12-diol, and 0 to 80 mol % by at least one diol that is different from linear aliphatic alpha,omega-C2-C12-diols, wherein each diol of the diol component preferably forms at least 10 mol % within the diol component, and wherein the mol % of the respective diols add up to 100 mol %.

The production of the polyurethane diisocyanates can be carried out in the presence of organic solvent inert towards isocyanate groups, followed by isolation of the polyurethane diisocyanates so prepared. Preferably, the production of the polyurethane diisocyanates is carried out without solvent and without subsequent purification operations.

The diisocyanate component and the diol component are reacted stoichiometrically with one another in the molar ratio (x+1) mol diisocyanate : x mol diol, wherein x represents any value from 2 to 6, preferably from 2 to 4.

50 to 80 mol % of the diisocyanate component is formed by 1,6-hexane diisocyanate, and 20 to 50 mol % by one or two diisocyanates selected from the group consisting of toluylene diisocyanate, diphenylmethane diisocyanate, dicyclohexylmèthane diisocyanate, isophorone diisocyanate, trimethylhexane diisocyanate, cyclohexane diisocyanate, cyclohexanedimethylene diisocyanate and tetramethylenexylylene diisocyanate, wherein if two diisocyanates are selected, each diisocyanate forms at least 10 mol % of the diisocyanates of the diisocyanate component. Preferably, the diisocyanate or the two diisocyanates, forming in total 20 to 50 mol % of the diisocyanate component, are selected from dicyclohexylmethane diisocyanate, isophorone diisocyanate, trimethylhexane diisocyanate, cyclohexane diisocyanate, cyclohexanedimethylene diisocyanate and tetramethylenexylyene diisocyanate.

The diol component consists to an extent of 20 to 100 mol% of at least one linear aliphatic alpha, omega-C2-C12-diol and to an extent of 0 to 80 mol% of at least one diol differing from linear aliphatic alpha,omega-C2-C12-diols. The diol component preferably consists of no more than four different diols, in particular only of one to three diols. In the case of only one diol, it accordingly comprises a linear aliphatic alpha,omega-C2-C12-diol. In the case of a combination of two, three or four diols, the diol component consists to an extent of 20 to 100 mol%, preferably of 80 to 100 mol%, of at least one linear aliphatic alpha,omega-C2-C12-diol and to an extent of 0 to 80 mol%, preferably of 0 to 20 mol% of at least one diol differing from linear aliphatic alpha,omega-C2-C12-diols and preferably also from alpha,omega-diols with more than 12 carbon atoms. The at least one diol differing from linear aliphatic alpha,omega-C2-C12-diols and preferably also from alpha,omega-diols with more than 12 carbon atoms comprises in particular (cyclo)aliphatic diols defined by empirical and structural formula and with a low molar mass in the range of 76 to 600. The proportion of possible non-(cyclo)aliphatic diols preferably amounts to no more than 30 mol% of the diols of the diol component. In the case of a diol combination, each diol preferably makes up at least 10 mol% of the diol component.

Preferably, the diol component does not comprise any non-(cyclo)aliphatic diols. Most preferably, it does not comprise any diols that are different from linear aliphatic alpha,omega-C2-C12-diols, but rather consists of one to four, preferably, one to three, and in particular only one linear aliphatic alpha,omega-C2-C12-diol.

In the case of the diol combination, the diol component may be introduced as a mixture of its constituent diols or the diols constituting the diol component may be introduced individually into the synthesis. It is also possible to introduce a proportion of the diols as a mixture and to introduce the remaining proportion(s) in the form of pure diol.

Examples of linear aliphatic alpha,omega-C2-C12-diols that may be used as one single diol or as constituent of the diol component are ethylene glycol, 1,3-propanediol, 1,4-butanediol, 1,5-pentanediol,1,6-hexanediol, 1,10-decanediol and 1,12-dodecanediol.

Examples of diols that are different from linear aliphatic alpha,omega-C2-C12-diols and may be used in the diol component are telechelic (meth)acrylic polymer diols, polyester diols, polyether diols, polycarbonate diols, each with a number-average molar mass of, for example, up to 800 as representatives of oligomeric or polymeric diols, bisphenol A as a representative of low molar mass non-(cyclo)aliphatic diols defined by empirical and structural formula and those isomers of propanediol and butanediol that are different from the isomers of propanediol and butanediol specified in the preceding paragraph, as well as, neopentyl glycol, butyl ethyl propanediol, the isomeric cyclohexanediols, the isomeric cyclohexanedimethanols, hydrogenated bisphenol A, tricyclodecanedimethanol, and dimer fatty alcohol as representatives of (cyclo)aliphatic diols defined by empirical and structural formula with a low molar mass in the range of 76 to 600.

The diisocyanates of the diisocyanate component and the diol component are preferably reacted together in the absence of solvents. The reactants may here all be reacted together simultaneously or in two or more synthesis stages. When the synthesis is performed in multiple stages, the reactants may be added in the most varied order, for example, also in succession or in alternating manner. The diol component may, for example, be divided into two or more portions or into individual diols, for example, such that the diisocyanates are initially reacted with part of the diol component before further reaction with the remaining proportion of the diol component. Equally, however, the diisocyanate component may also be divided into two or more portions or into the individual diisocyanates, for example, such that the hydroxyl components are initially reacted with part of the diisocyanate component and finally with the remaining proportion of the diisocyanate component. The individual reactants may in each case be added in their entirety or in two or more portions. The reaction is exothermic and proceeds at a temperature above the melting temperature of the reaction mixture. The reaction temperature is, for example, 60 to 200°C. The rate of addition or quantity of reactants added is accordingly determined on the basis of the degree of exothermy and the liquid (molten) reaction mixture may be maintained within the desired temperature range by heating or cooling.

Once the reaction carried out in the absence of solvent is complete and the reaction mixture has cooled, solid polyurethane diisocyanates are obtained. When low molar mass diols defined by empirical and structural formula are used for synthesis of the Polyurethane diisocyanates, their calculated molar masses are in the range of 625 or above, for example, up to 2300.

The polyurethane diisocyanates assume the form of a mixture exhibiting a molar mass distribution. The polyurethane diisocyanates do not, however, require working up and may be used directly as isocyanate-functional polyurethane resins B.

In a third preferred embodiment, the polyurethane resins B are polyurethane polyisocyanates which can be prepared by reacting a trimer of a (cyclo)aliphatic diisocyanate, 1,6-hexanediisocyanate and a diol component in the molar ratio 1 : x : x, wherein x means any desired value from 1 to 6, preferably, from 1 to 3, wherein the diol component is one single linear aliphatic alpha,omega C2-C12 diol or a combination of two to four, preferably, two or three, (cyclo)aliphatic diols, wherein in the case of diol combination, each of the diols makes up at least 10 mol % of the diols of the diol combination and the diol combination consists of at least 80 mol % of at least one linear aliphatic alpha,omega C2-C12 diol.

The trimer of the(cyclo)aliphatic diisocyanate, 1,6-hexanediisocyanate and the diol component are reacted stoichiometrically with one another in the molar ratio 1 mol trimer of the (cyclo)aliphatic diisocyanate : x mol 1,6-hexanediisocyanate : x mol diol, wherein x represents any value from 1 to 6, preferably from 1 to 3.

The trimer of the (cyclo)aliphatic diisocyanate is polyisocyanates of the isocyanurate type, prepared by trimerization of a (cyclo)aliphatic diisocyanate. Appropriate trimerization products derived, for example, from 1,4-cyclohexanedimethylenediisocyanate, in particular, from isophorondiisocyanate and more particularly, from 1,6-hexanediisocyanate, are suitable. The industrially obtainable isocyanurate polyisocyanates generally contain, in addition to the pure trimer, i.e., the isocyanurate made up of three diisocyanate molecules and comprising three NCO functions, isocyanate-functional secondary products with a relatively high molar mass. Products with the highest possible degree of purity are preferably used. In each case, the trimers of the (cyclo)aliphatic diisocyanates obtainable in industrial quality are regarded as pure trimer irrespective of their content of said isocyanate-functional secondary products with respect to the molar ratio of 1 mol trimer of the (cyclo)aliphatic diisocyanate : x mol 1,6-hexanediisocyanate : x mol diol.

One single linear aliphatic alpha,omega C2-C12 diol or combinations of two to four, preferably of two or three, (cyclo)aliphatic diols are used as the diol component. The diol combination preferably consists of two to four, in particular two or three, linear aliphatic alpha,omega C2-C12 diols.

Examples of one single linear aliphatic alpha,omega C2-C12 diol or linear aliphatic alpha,omega C2-C12 diols which can be used within the diol combination are ethylene glycol, 1,3-propanediol, 1,4-butanediol, 1,5-pentanediol, 1,6-hexanediol, 1,10-decanediol, 1,12-dodecanediol.

Examples of (cyclo)pliphatic diols which can be used within the diol combination in addition to the at least one linear aliphatic alpha,omega C2-C12 diol making up at least 80 mol % of the diol combination are the further isomers of propane and butane diol, different from the isomers of propane and butane diol cited in the preceding paragraph, and neopentylglycol, butylethylpropanediol, the isomeric cyclohexane diols, the isomeric cyclohexanedimethanols, hydrogenated bisphenol A and tricyclodecanedimethanol.

In the case of the diol combination, the mixture of the diols making up the combination can be used in the synthesis process or the diols making up the diol combination are each used individually in the synthesis. It is also possible to use a portion of the diols as a mixture and the remaining fraction(s) in the form of pure diol.

In the case of the diol combination, preferred diol combinations totalling 100 mol % in each case are combinations of 10 to 90 mol % 1,3-propanediol with 90 to 10 mol % 1,5-pentanediol, 10 to 90 mol % 1,3-propanediol with 90 to 10 mol % 1,6-hexanediol and 10 to 90 mol % 1,5-pentanediol with 90 to 10 mol % 1,6-hexanediol.

The trimer of the (cyclo)aliphatic diisocyanate, 1,6-hexanediisocyanate and the diol component are preferably reacted together in the absence of solvents. The reactants may here all be reacted together simultaneously or in two or more synthesis stages. Synthesis procedures in which the diol component and the trimer of the (cyclo)aliphatic diisocyanate alone are reacted with one another are preferably avoided.

When the synthesis is performed in multiple stages, the reactants may be added in the most varied order, for example, also in succession or in alternating manner. For example, 1,6-hexanediisocyanate may be reacted initially with the diol component and then with the trimer of the (cyclo)aliphatic diisocyanate or a mixture of the isocyanate-functional components with the diol component. In the case of a diol combination, the diol component may, for example, also be divided into two or more portions, for example, also into the individual (cyclo)aliphatic diols. The individual reactants may in each case be added in their entirety or in two or more portions. The reaction is exothermic and proceeds at a temperature above the melting temperature of the reaction mixture. The reaction temperature is, for example, 60 to 200°C. The rate of addition or quantity of reactants,added is accordingly determined on the basis of the degree of exothermy and the liquid (molten) reaction mixture may be maintained within the desired temperature range by heating or cooling.

Once the reaction carried out in the absence of solvents is complete and the reaction mixture has cooled, solid polyurethane polyisocyanates with number average molar masses in the range of 1,500 to 4,000 are obtained. The polyurethane polyisocyanates do not require working up and may be used directly as isocyanate-functional polyurethane resins B.

The at least one isocyanate-functional polyurethane resin B is present in particulate form, in particular in the form of particles with a non-spherical shape, in the coating compositions. The average particle size (mean particle diameter) of the polyurethane resin B particles determined by means of laser diffraction is, for example, 1 to 100 µm. The polyurethane resin B particles may be formed by grinding (milling) of the solid polyurethane resin(s) B; for example, conventional powder coat production technology may be used for that purpose. The polyurethane resin B particles may either be stirred or mixed as a ground powder into the liquid coating composition or liquid constituents thereof, wherein it is possible subsequently to perform additional wet grinding or dispersing of the polyurethane resin B particles, for example, by means of a bead mill, in the resultant suspension.

A further method for forming the polyurethane resin B particles involves hot dissolution of the at least one polyurethane resin B in a dissolution medium and subsequent polyurethane resin B particle formation during and/or after cooling, in particular, dissolving the at least one polyurethane resin B in a proportion or the entirety of component A with heating to the melting temperature or above, for example, to temperatures of 40 to above 180°C, whereupon the polyurethane resin B particles may form during and/or after the subsequent cooling. The component A used as dissolution medium for the at least one polyurethane resin B may here be present liquid as such or as a solution in an organic solvent (mixture) inert towards isocyanate groups. Thorough mixing or stirring is preferably performed during cooling. Dissolution of the at least one Polyurethane resin B may also be performed with heating in an organic solvent (mixture) inert towards isocyanate groups, wherein the formation of the polyurethane resin B particles, which proceeds during and/or after the subsequent cooling, may proceed in the solvent itself or after mixing of the resultant, as yet uncooled solution with the component A. By using the method of hot dissolution and subsequent polyurethane resin B particle formation during and/or after cooling, it is in particular possible to produce polyurethane resin B particles with average particle sizes at the lower end of the range of average particle sizes, for example, in the range of 1 to 50 µm, in particular 1 to 30 µm.

As already stated, the coating compositions according to the invention contain at least one binder C with groups reactive towards the isocyanate groups of A and B. The binders C in particular comprise conventional hydroxyl-functional binders. Binders C with hydroxyl groups which may be considered are conventional hydroxyl-functional binders known to the person skilled in the art. Examples are polyester, polyurethane and (meth)acrylic copolymer resins and hybrid binders derived from these classes of binders, in each case with hydroxyl values of, for example, 60 to 300 mg of KOH/g and number-average molar masses of, for example, 500 to 10000.

The molar ratio of groups reactive towards isocyanate groups, in particular hydroxyl groups, from the at least one binder C to isocyanate groups from the isocyanate component consisting of components A and B is, for example, 0.5 : 1 to 3 :1, in particular 0.7 : 1 to 2 :1 .

The coating compositions according to the invention may contain one or more components D which contribute towards the resin solids content. The term "components D" means components free of groups which are reactive towards isocyanate groups, such as, in particular, hydroxyl groups, and also free of isocyanate groups. The components D comprise in particular corresponding resins and/or crosslinking agents. Examples of type D resins are physically drying resins or resins which may be chemically cured by reactions other than the addition of groups reactive towards isocyanate groups, such as, in particular, hydroxyl groups, onto isocyanate groups. Examples of type D crosslinking agents are, in particular, conventional crosslinking agents known to the person skilled in the art, in particular, for coating systems based on hydroxy-functional binders, such as, for example, transesterification crosslinking agents; blocked polyisocyanate crosslinking agents; amino resin crosslinking agents, such as, melamine-formaldehyde resins; and/or trisalkoxycarbonylaminotriazine crosslinking agents.

One, some or each of components B, C and D may contain free-radically polymerizable olefinic double bonds. The coating compositions according to the invention may then be cured not only by the reaction of the isocyanate groups of components A and B with the groups of the binder(s) C which are reactive towards isocyanate groups, but additionally by free-radical polymerization of the olefinic double bonds, in particular, by photochemically induced free-radical polymerization. Such compositions are also known as "dual-cure" coating compositions.

The coating compositions according to the invention contain organic solvent(s) inert towards isocyanate groups and they have a solids content of, for example, 40 to 85 wt.%, preferably 45 to 75 wt.%. The organic solvent content is, for example, 15 to 60 wt.%, preferably 25 to 55 wt.%; the sum of the wt.-% of the solids content and the organic solvent content is here, for example, 90 to 100 wt.-% (any possible difference in the corresponding, range of above 0 to 10 wt.-% to make up to the total of 100 wt.% is in general formed by volatile additives). The organic solvents are in particular conventional coating solvents, for example, glycol ethers, such as, dipropylene glycol dimethyl ether, dipropylene glycol monomethyl ether, ethylene glycol dimethylether; glycol ether esters, such as, ethyl glycol acetate, butyl glycol acetate, butyl diglycol acetate, methoxypropyl acetate; esters, such as, butyl acetate, isobutyl acetate, amyl acetate; ketones, such as, methyl ethyl ketone, methyl isobutyl ketone, diisobutyl ketone, cyclohexanone, isophorone; N-alkyl pyrrolidones, such as, N-methyl pyrrolidone; aromatic hydrocarbons, such as, xylene, Solvesso® 100 (mixture of aromatic hydrocarbons with a boiling range from 155°C to 185°C), Solvesso® 150 (mixture of aromatic hydrocarbons with a boiling range from 182°C to 202°C) and aliphatic hydrocarbons.

Apart from the solvents, the coating compositions may contain further conventional coating additives, for example, inhibitors, catalysts, levelling agents, wetting agents, anticratering agents, antioxidants and/or light stabilizers. The additives are used in conventional amounts known to the person skilled in the art. In case of dual cure coating compositions photoinitiators are contained in general.

The coating compositions may also contain transparent pigments, color-imparting and/or special effect-imparting pigments and/or fillers, for example, corresponding to a ratio by weight of pigment plus filler : resin solids content in the range from 0:1 to 2:1. Suitable color-imparting pigments are any conventional coating pigments of an organic or inorganic nature. Examples of inorganic or organic color-imparting pigments are titanium dioxide, iron oxide pigments, carbon black, azo pigments, phthalocyanine pigments, quinacridone pigments and pyrrolopyrrole pigments. Examples of special effect pigments are metal pigments, for example, of aluminum, copper or other metals, interference pigments, such as, for example, metal oxide-coated metal pigments, for example, iron oxide-coated aluminum, coated mica, such as, for example, titanium dioxide-coated mica, graphite effect-imparting pigments, iron oxide in flake form, liquid crystal pigments, coated aluminum oxide pigments, coated silicon dioxide pigments. Examples of fillers are silicon dioxide, aluminum silicate, barium sulfate, calcium carbonate and talc.

Unless they are to be applied shortly or immediately after the production thereof, the coating compositions according to the invention are produced by mixing together components which are to be stored separately, wherein one of the components contains the at least one polyisocyanate A and the other component contains the at least one binder C comprising groups reactive towards isocyanate groups. The at least one isocyanate-functional polyurethane resin B may here be a, constituent of one and/or both of the components; it is preferably a constituent only of the component containing the at least one polyisocyanate A.

The coating compositions may be used for the production of single-layer coatings or for the production of one or more coating layers within a multilayer coating, such as, in particular, an automotive multilayer coating, either on an automotive body or on an automotive body part. This may relate to both original and repair coating applications. The coating compositions may in particular be used in pigmented form for the production of a primer surfacer layer or in pigment-free form for the production of an outer clear top coat layer or a transparent sealing layer of a multilayer coating. They may, for example, be used for the production of a clear top coat layer on a previously applied color-imparting and/or special effect-imparting predried base coat layer.

The coating compositions may be applied by means of conventional application methods, in particular, by spraying onto any desired uncoated or precoated substrates, for example, of metal or plastics. The coating compositions according to the invention may exhibit low application viscosities at a comparatively high resin solids content. This is advantageous in the case of spray application, because it is possible, for example, then to use conventional spray application units, as are used for the application of liquid coatings in industrial coating facilities.

Once applied, layers of the coating compositions according to the invention may initially be flashed off to remove solvent, for example, for one to five minutes at 20 to 80°C. Thermal curing then proceeds at object temperatures above the melting temperature of the isocyanate-functional polyurethane resin(s) B contained in the corresponding coating composition, for example, for 5 to 30 minutes at 40 to 220°C, for example, by baking. If the difference between the melting temperature and the actual curing temperature is sufficiently large, it is possible initially to effect only or substantially only the melting of the polyurethane resin B particles, before the actual crosslinking subsequently proceeds during and/or after a further increase in temperature to the curing temperature. During and/or after melting the polyurethane resin B particles the polyurethane resin B may become incorporated into the resin matrix.

If the coating compositions according to the invention are dual-cure coating compositions, thermal curing is combined with curing by free-radical polymerization of olefinic double bonds induced by irradiation with high-energy radiation, in particular UV radiation. Thermal curing and radiation curing may here proceed simultaneously or in any desired order. Melting of the polyurethane resin B particles must, however, be ensured priorto curing.

### Examples

### Examples 1a to 1f (Preparation of Polyurethane Diisocyanates):

Polyurethane diisocyanates were produced by reacting HDI (1,6-hexane diisocyanate) with one or more diols in accordance with the following general synthesis method:
HDI was initially introduced into a 2 litre four-necked flask equipped with a stirrer, thermometer and column and 0.01 wt.% dibutyltin dilaurate, based on the quantity of isocyanate introduced, were added. The content of the flask was heated to 60°C. The diol (mixture) was then apportioned and a temperature was maintained so that the hot reaction mixture did not solidify. The reaction mixture was stirred until the theoretical free isocyanate content was reached. The hot melt was then discharged and allowed to cool and solidify.

The melting behavior of the resultant polyurethane diisocyanates was investigated by means of DSC (differential scanning calorimetry, heating rate 10 K/min).

Examples 1a to 1f are shown in Table 1. The Table states which reactants were reacted together in what molar ratios and the final temperature of the melting process measured by DSC is stated in °C.

**TABLE 1**

| Example | Mols HDI | Mols diol A | Mols diol B | Mols diol C | Final temperature of the melting process |
|---|---|---|---|---|---|
| 1a | 3 | 1 PROP | 1 HEX | 115°C | 115°C |
| 1b | 3 | 0.5 PROP | 1.5 HEX | | 127°C |
| 1c | 3 | 2 PENT | | | 125°C |
| 1d | 4 | 1 PENT | 1 PROP | 1 HEX | 102°C |
| 1e | 3 | 1 PENT | 1 HEX | | 108°C |
| 1f | 3 | 0.1 DFA | 1 PROP | 0.9 HEX | 90°C |

| | | | | | |
|---|---|---|---|---|---|
| DFA: dimer fatty alcohol HEX: 1,6-hexanediol PENT: 1,5-pentanediol PROP: 1,3-propanediol | | | | | |

### Examples 2a to 2d (Preparation of Polyurethane Polyisocyanates):

Polyurethane polyisocyanates were produced by reacting t-HDI (trimeric hexanediisocyanate, Desmodur® N3600 from Bayer), HDI and a diol component in accordance with the following general synthesis method:
A mixture of a t-HDI and. HDI was initially introduced into a 2 litre four-necked flask equipped with a stirrer, thermometer and column and 0.1 % by weight dibutyl tin dilaurate, based on the quantity of isocyanate introduced, were added. The reaction mixture was heated to 60°C. A diol (mixture) was then apportioned and a temperature was maintained so that the hot reaction mixture did not solidify. The reaction mixture was stirred until the theoretical free isocyanate content was reached. The hot melt was then discharged and allowed to cool and solidify.

The melting behavior of the resultant polyurethane polyisocyanates was investigated by means of DSC (differential scanning calorimetry, heating rate 10 K/min).

Examples 2a to 2d are shown in Table 2. The Table states which reactants were reacted together in what molar ratios and the final temperature of the melting process measured by DSC is stated in °C.

**Table 2**

| Example | Mols of trimeric diisocyanate | Mols of HDI | Mols of diol A | Mols of diol B | Final temperature of the melting process |
|---|---|---|---|---|---|
| 2a | 1 t-HDI | 3 | 3 PROP | | 91°C |
| 2b | 1 t-HDI | 3 | 1.5 PROP | 1.5 HEX | 92°C |
| 2c | 1 t-HDI | 3 | 3 PENT | | 99°C |
| 2d | 1 t-HDI | 3 | 3 HEX | | 112°C |

### Example 3 (Production of a Clear Coat Composition and an Outer Clear Coal Layer of a Multi-Layer Coasting for Comparison Purposes):

A base was prepared by mixing the following components:

| | |
|---|---|
| 61.6 | pbw (parts by weight) of a 65 wt-% solution of a methacrylic copolymer (acid value 5 mg KOH/g, hydroxyl value 147 mg KOH/g) in a 2 : 1 mixture of Solvesso® 100 and butyl acetate |
| 6.7 | pbw of a 65 wt-% solution of a branched polyester (acid value 41 mg KOH/g, hydroxyl value 198 mg KOH/g, number-average molecular mass 1000) in Solvesso® 100 |
| 5.3 | pbw of ethoxypropyl acetate |
| 6.8 | pbw of Solvesso® 150 |
| 1.2 | pbw of Tinuvin® 292 from Ciba (light protecting agent) |
| 1.2 | pbw of Tinuvin® 384 from Ciba (UV-absorber) |
| 2.0 | pbw of butyl acetate |
| 4.3 | pbw of butyl diglycol acetate |
| 4.4 | pbw of butyl glycol acetate |
| 6.5 | pbw of Solvesso® 100 |

A clear coat was prepared by mixing 100 pbw of the base with 50 pbw of a 68 wt-% solution of a polyisocyanate hardener mixture (isocyanurate of isophorone diisocyanate and isocyanurate of hexamethylene diisocyanate in a weight ratio of 2 : 1) in a 2 : 1 mixture of Solvesso® 100 and butyl acetate.

The initial flow time according to DIN EN ISO 2431 with a DIN 4 cup at 20°C was determined directly after mixing the base and the polyisocyanate hardener (28 seconds). The pot-life of the clear coat in terms of the time period for doubling the initial flow time was two hours.

A metal panel provided with a cataphoretic primer and a 35 µm thick hydroprimer surfacer layer applied thereto and baked was spray-coated with a black waterborne base coat in a dry layer thickness of 15 µm, flashed off for 5 minutes at 70°C and then spray-coated with the clear coat in a vertical position in a wedge shape with a layer thickness gradient from 10 µm to 70 µm dry layer thickness, and after 10 minutes flashing off at room temperature, baking was carried out for 30 minutes at 130°C (object temperature). The clear coat sag limit was visually determined.

### Examples 4a to 4k (Production of Clear Coat Compositions and Outer Clear Coat Layers of Multi-Layer Coatings According to the Invention):

Solid polyurethane diisocyanates of Examples 1a to 1e and solid polyurethane polyisocyanate of Examples 2a to 2d were in each case comminuted, ground and sieved by means of grinding and sieving methods conventional for the production of powder coatings and, in this manner, converted into binder powders with an average particle size of 50 µm (determined by means of laser diffraction).

Example 3 was repeated several times wherein part of the solution of the polyisocyanate hardener mixture was replaced by a pulverulent polyurethane diisocyanate or polyurethane polyisocyanate prepared according to the procedure described in the preceding paragraph. The replacement was performed by substituting the pulverulent polyurethane diisocyanate or polyisocyanate for part of the solution of the polyisocyanate hardener mixture in each case according to a 10 mol-% or in a second series in each case according to a 20 mol-% substitution of NCO. Where necessary, the initial flow time was adjusted to the same value as in Example 3.

Pot-life and sag limit were determined under the same conditions as in Example 3.

Table 3 shows the pot-life and the measured sag limit in µm, with reference to Examples 3 and 4a to 4k in each case for a 10 mol-% or a 20 mol-% substitution of NCO. The first stated value in each case relates to the 10 mol-% and the second value to the 20 mol-% substitution.

**Table 3**

| Examples (NCO-funct. polyurethane powder used) | Pot-life (hours) | Sag limit (µm) |
|---|---|---|
| 3(./.) | 2 | 33 |
| 4a (1a) | 2.4; 2.8 | ./.; 34 |
| 4b (1b) | 2.6; 2.9 | 33; 36 |
| 4c (1c) | 2.4; 2.6 | ./.; 35 |
| 4d (1d) | 2.4; 2.6 | ./.; 37 |
| 4e (1e) | 2.1; 2.3 | ./.; 34 |
| 4f (1f) | 2.2; 2.5 | 34; 36 |
| 4g (2a) | 2.3; 2.6 | 33; 37 |
| 4h (2b) | 2.3; 2.5 | ./.; 35 |
| 4i (2c) | 2.2; 2.4 | ./.; 36 |
| 4k (2d) | 2.1; 2.4 | 34; ./. |

## Claims

1. Non-aqueous, liquid coating compositions which contain at least one polyisocyanate A, at least one isocyanate-functional polyurethane resin B differing from the at least one polyisocyanate A and at least one binder C with groups reactive towards the isocyanate groups of A and B, wherein the at least one polyisocyanate A is not solid at room temperature and/or is present in dissolved form and wherein the at least one polyurethane resin B is present as particles having a melting temperature of 40 to 180°C.

2. The coating compositions of claim 1, wherein the solids content is 40 to 85 wt.%, the organic solvent content is 15 to 60 wt.% and the sum of the wt.-% of the solids content and the organic solvent content is 90 to 100 wt.-% and wherein the solids content consists of the resin solids content and the optional components: pigments, fillers and non-volatile additives.

3. The coating compositions of claim 2, wherein the resin solids content consists of 20 to 70 wt.% of the isocyanate component consisting of components A and B, 30 to 80 wt.% of the at least one binder C and 0 to 30 wt.% of one or more components D, wherein the weight percentages add up to 100 wt.%.

4. The coating compositions of claim 3, wherein the isocyanate component consists of more than 0 to 90 wt.% of the at least one polyisocyanate A and 10 to less than 100 wt.% of the at least one isocyanate-functional polyurethane resin B, wherein the weight percentages add up to 100 wt.%.

5. The coating compositions of any one of the preceding claim, wherein the melting temperature of the at least one polyurethane resin B is the upper end of a 30 to 150°C broad melting range.

6. The coating compositions of any one of the preceding claims, wherein the solubility of the at least one polyurethane resin B is less than 10 g per litre of butyl acetate at 20°C.

7. The coating compositions of any one of the preceding claims, wherein the average particle size of the polyurethane resin B particles determined by means of laser diffraction is 1 to 100 µm.

8. The coating compositions of any one of the preceding claims, wherein the polyurethane resin B particles are formed by grinding of the at least one solid polyurethane resin B or by hot dissolution of the at least one polyurethane resin B in a dissolution medium and subsequent polyurethane resin B particle formation during and/or after cooling.

9. The coating compositions of any one of the preceding claims, wherein the at least one polyurethane resin B is a polyurethane diisocyanate which can be prepared by reacting 1,6-hexane diisocyanate with a diol component in the molar ratio (x+1) : x, wherein x means any desired value from 2 to 6, wherein the diol component is one single diol or a combination of diols.

10. The coating compositions of any one of claims 1 to 8, wherein the at least one polyurethane resin B is a polyurethane,diisocyanate which can be prepared by reacting a diisocyanate component and a diol component in the molar ratio (x+1) : x, wherein x means any desired value from 2 to 6, wherein 50 to 80 mol % of the diisocyanate component is formed by 1,6-hexane diisocyanate, and 20 to 50 mol % by one or two diisocyanates, each forming at least 10 mol % of the diisocyanate component and being selected from the group consisting of toluylene diisocyanate, diphenylmethane diisocyanate, dicyclohexylmethane diisocyanate, isophorone diisocyanate, trimethylhexane diisocyanate, cyclohexane diisocyanate, cyclohexanedimethylene diisocyanate and tetramethylenexylylene diisocyanate, wherein the mol % of the respective diisocyanates add up to 100 mol %, wherein 20 to 100 mol % of the diol component is formed by at least one linear aliphatic alpha,omega-C2-C12-diol, and 0 to 80 mol % by at least one diol that is different from linear aliphatic alpha,omega-C2-C12-diols, wherein the mol % of the respective diols add up to 100 mol %.

11. The coating compositions of any one of claims 1 to 8, wherein the at least one polyurethane resin B is a polyurethane polyisocyanate which can be prepared by reacting a trimer of a (cyclo)aliphatic diisocyanate, 1,6-hexanediisocyanate and a diol component in the molar ratio 1 : x : x, wherein x means any desired value from 1 to 6, wherein the diol component is one single linear aliphatic alpha,omega C2-C12 diol or a combination of two to four (cyclo)aliphatic diols, wherein in the case of diol combination, each of the diols makes up at least 10 mol % of the diols of the diol combination and the diol combination consists of at least 80 mol % of at least one linear aliphatic alpha,omega C2-C12 diol.

12. A process for the preparation of a coating layer, comprising the successive steps:
1) applying a coating layer from a coating composition of any one of the preceding claims,
2) optionally, flashing off the applied coating layer to remove solvent, and
3) thermally curing the coating layer at an object temperature above the melting temperature of the at least one polyurethane resin B.

13. The process of claim 12, wherein the coating layer is selected from the group consisting of a single-layer coating and a coating layer within a multilayer coating.

14. The process of claim 13, wherein the coating layer within the multilayer coating is an automotive multilayer coating on a substrate selected from the group consisting of automotive bodies and automotive body parts.

15. The process of claim 14, wherein the coating layer is selected from the group consisting of a primer surfacer layer, an outer clear top coat layer and a transparent sealing layer.

## Patentansprüche

1. Nichtwässrige, flüssige Beschichtungszusammensetzungen, die mindestens ein Polyisocyanat A, mindestens ein isocyanatfunktionelles Polyurethanharz B, das von dem mindestens einen Polyisocyanat A verschieden ist, und mindestens ein Bindemittel C mit den Isocyanatgruppen von A und B gegenüber reaktiven Gruppen enthalten, wobei das mindestens eine Polyisocyanat A bei Raumtemperatur nicht fest ist und/oder in gelöster Form vorliegt und wobei das mindestens eine Polyurethanharz B als Teilchen vorliegt, die eine Schmelztemperatur von 40 bis 180 °C aufweisen.

2. Beschichtungszusammensetzungen nach Anspruch 1, wobei der Feststoffgehalt 40 bis 85 Gew.-%, der organische Lösungsmittelgehalt 15 bis 60 Gew.-% und die Summe der Gewichtsprozente des Feststoffgehalts und des organischen Lösungsmittelgehalts 90 bis 100 Gew.-% beträgt und wobei der Feststoffgehalt aus dem Harzfeststoffgehalt und den wahlweisen Komponenten: Pigmente, Füllstoffe und nichtflüchtige Zusatzmittel besteht.

3. Beschichtungszusammensetzungen nach Anspruch 2, wobei der Harzfeststoffgehalt aus 20 bis 70 Gew.-% der Isocyanatkomponente, die aus den Komponenten A und B besteht, 30 bis 80 Gew.-% des mindestens einen Bindemittels C und 0 bis 30 Gew.-% einer oder mehrerer Komponenten D besteht, wobei die Gewichtsprozentsätze sich auf 100 Gew.-% addieren.

4. Beschichtungszusammensetzungen nach Anspruch 3, wobei die Isocyanatkomponente aus mehr als 0 bis 90 Gew.-% des mindestens einen Polyisocyanats A und 10 bis weniger als 100 Gew.-% des mindestens einen isocyanatfunktionellen Polyurethans B besteht, wobei die Gewichtsprozentsätze sich auf 100 Gew.-% addieren.

5. Beschichtungszusammensetzungen nach einem der vorhergehenden Ansprüche, wobei die Schmelztemperatur des mindestens einen Polyurethanharzes B am oberen Ende eines 30 bis 150 °C breiten Schmelzbereichs liegt.

6. Beschichtungszusammensetzungen nach einem der vorhergehenden Ansprüche, wobei die Löslichkeit des mindestens einen Polyurethanharzes B geringer als 10 g pro Liter Butylacetat bei 20 °C ist.

7. Beschichtungszusammensetzungen nach einem der vorhergehenden Ansprüche, wobei die durchschnittliche Teilchengröße der Polyurethanharz B-Teilchen, durch Laserbeugung bestimmt, 1 bis 100 µm beträgt.

8. Beschichtungszusammensetzungen nach einem der vorhergehenden Ansprüche, wobei die Polyurethanharz B-Teilchen durch Mahlen des mindestens einen festen Polyurethanharzes B oder durch Heißlösen des mindestens einen Polyurethanharzes B in einem Lösungsmedium und darauffolgende Polyurethanharz B-Teilchenbildung während und/oder nach dem Kühlen gebildet werden.

9. Beschichtungszusammensetzungen nach einem der vorhergehenden Ansprüche, wobei das mindestens eine Polyurethanharz B ein Polyurethandiisocyanat ist, das durch Reagieren von 1,6-Hexandiisocyanat mit einer Diolkomponente im Molverhältnis von (x+1) : x hergestellt werden kann, wobei x irgend einen erwünschten Wert von 2 bis 6 bedeutet, wobei die Diolkomponente ein einzelnes Diol oder ein Kombination von Diolen ist.

10. Beschichtungszusammensetzungen nach einem der Ansprüche 1 bis 8, wobei das mindestens eine Polyurethanharz B ein Polyurethandiisocyanat ist, das durch Reagieren einer Diisocyanatkomponente und einer Diolkomponente im Molverhältnis von (x+1) : x hergestellt werden kann, wobei x irgend einen erwünschten Wert von 2 bis 6 bedeutet, wobei 50 bis 80 Mol-% der Diisocyanatkomponente durch 1,6-Hexandiisocyanat und 20 bis 50 Mol-% durch ein oder zwei Diisocyanate gebildet werden, wobei jedes mindestens 10 Mol-% der Diisocyanatkomponente bildet und aus der Gruppe ausgewählt ist bestehend aus Toluylendiisocyanat, Diphenylmethyldiisocyanat, Dicyclohexylmethandiisocyanat, Isophorondiisocyanat, Trimethylhexandiisocyanat, Cyclohexandiisocyanat, Cyclohexandimethylendiisocyanat und Tetramethylenxylylendiisocyanat, wobei die Mol-% der jeweiligen Diisocyanate sich auf 100 Mol-% addieren und wobei 20 bis 100 Mol-% der Diolkomponente durch mindestens ein lineares aliphatisches alpha,omega-C2-C12-Diol und 0 bis 80 Mol% durch mindestens ein Diol gebildet werden, das von den linearen aliphatischen alpha,omega-C2-C12-Diolen verschieden ist, wobei die Mol-% der jeweiligen Diole sich auf 100 Mol-% addieren.

11. Beschichtungszusammensetzungen nach einem der Ansprüche 1 bis 8, wobei das mindestens eine Polyurethanharz B ein Polyurethanpolyisocyanat ist, das durch Reagieren eines Trimers eines (cyclo)aliphatischen Diisocyanats, von 1,6-Hexandiisocyanat und einer Diolkomponente in einem Molverhältnis von 1 : x : x hergestellt werden kann, wobei x irgend einen erwünschten Wert von 1 bis 6 bedeutet, wobei die Diolkomponente ein einzelnes lineares aliphatisches alpha,omega-C2-C12-Diol oder eine Kombination von zwei bis vier (cyclo)aliphatischen Diolen ist, wobei im Falle der Diolkombination jedes der Diole mindestens 10 Mol-% der Diole der Diolkombination ausmacht und die Diolkombination aus mindestens 80 Mol-% mindestens eines linearen aliphatischen alpha,omega-C2-C12-Diols besteht.

12. Verfahren zur Herstellung einer Beschichtungsschicht, umfassend die aufeinanderfolgenden Schritte:
1) Aufbringen einer Beschichtungsschicht aus einer Beschichtungszusammensetzung nach einem der vorhergehenden Ansprüche,
2) wahlweise Ablüften der aufgebrachten Beschichtungsschicht, um Lösungsmittel zu entfernen, und
3) Warmaushärten der Beschichtungsschicht bei einer Objekttemperatur über der Schmelztemperatur des mindestens einen Polyurethanharzes B.

13. Verfahren nach Anspruch 12, wobei die Beschichtungsschicht aus der Gruppe ausgewählt ist bestehend aus einer Einschichtbeschichtung und einer Beschichtungsschicht innerhalb einer Mehrschichtbeschichtung.

14. Verfahren nach Anspruch 13, wobei die Beschichtungsschicht innerhalb der Mehrschichtbeschichtung eine Automobil-Mehrschichtbeschichtung auf einem Substrat ausgewählt aus der Gruppe bestehend aus Karosserien und Karosserieteilen ist.

15. Verfahren nach Anspruch 14, wobei die Beschichtungsschicht aus der Gruppe ausgewählt ist bestehend aus einer Grundierhaftvermittlerschicht, einer äußeren klaren Decklackschicht und einer transparenten Siegelschicht.

## Revendications

1. Compositions de revêtement liquide, non aqueuses qui contiennent au moins un polyisocyanate A, au moins une résine B de polyuréthane à fonctionnalité isocyanate différente du au moins un polyisocyanate A et au moins un liant C avec des groupes réactifs vis-à-vis des groupes isocyanate de A et B, dans lesquelles le au moins un polyisocyanate A n'est pas solide à la température ambiante et/ou est présent sous une forme dissoute et dans lesquelles la au moins une résine B de polyuréthane est présente sous la forme de particules ayant une température de fusion de 40 à 180°C.

2. Compositions de revêtement selon la revendication 1, dans lesquelles la teneur en matières solides est de 40 à 85 % en pds, la teneur en solvant organique est de 15 à 60 % en pds et la somme des % en pds de la teneur en matières solides et de la teneur en solvant organique est de 90 à 100 % en pds et dans lesquelles la teneur en matières solides est constituée de la teneur en matières solides de type résine et en composants facultatifs: pigments, charges et additifs non volatils.

3. Compositions de revêtement selon la revendication 2, dans lesquelles la teneur en matières solides de type résine est constituée de 20 à 70 % en pds du composant isocyanate constitué des composants A et B, 30 à 80 % en pds du au moins un liant C et 0 à 30 % en pds d'un ou plusieurs composant(s) D, dans lesquelles les pourcentages en poids se cumulent jusqu'à atteindre 100 % en pds.

4. Compositions de revêtement selon la revendication 3, dans lesquelles le composant isocyanate est constitué de plus de 0 à 90 % en pds du au moins un polyisocyanate A et de 10 à moins de 100 % en pds de la au moins une résine B de polyuréthane à fonctionnalité isocyanate, dans lesquelles les pourcentages en poids se cumulent jusqu'à atteindre 100 % en pds.

5. Compositions de revêtement selon l'une quelconque des revendications précédentes, dans lesquelles la température de fusion de la au moins une résine B de polyuréthane se trouve à l'extrémité haute d'une large plage de fusion de 30 à 150°C.

6. Compositions de revêtement selon l'une quelconque des revendications précédentes, dans lesquelles la solubilité de la au moins une résine B de polyuréthane est inférieure à 10 g par litre d'acétate de butyle à 20°C.

7. Compositions de revêtement selon l'une quelconque des revendications précédentes, dans lesquelles la taille moyenne des particules de résine B de polyuréthane déterminée à l'aide de la diffraction laser est de 1 à 100 µm.

8. Compositions de revêtement selon l'une quelconque des revendications précédentes, dans lesquelles les particules de résine B de polyuréthane sont formées par broyage de la au moins une résine B solide de polyuréthane ou par dissolution à chaud de la au moins une résine B de polyuréthane dans un milieu de dissolution et la formation ultérieure de particules de résine B de polyuréthane durant et/ou après le refroidissement.

9. Compositions de revêtement selon l'une quelconque des revendications précédentes, dans lesquelles la au moins une résine B de polyuréthane est un diisocyanate de polyuréthane qui peut être préparé par la réaction de diisocyanate de 1,6-hexane avec un composant diol sous le rapport molaire (x+1):x, dans lequel x signifie n'importe quelle valeur souhaitée de 2 à 6, dans lesquelles le composant diol est un diol unique ou une combinaison de diols.

10. Compositions de revêtement selon l'une quelconque des revendications 1 à 8, dans lesquelles la au moins une résine B de polyuréthane est un diisocyanate de polyuréthane qui peut être préparé par la réaction d'un composant diisocyanate et d'un composant diol sous le rapport molaire (x+1):x, dans lesquelles x signifie n'importe quelle valeur souhaitée de 2 à 6, dans lesquelles 50 à 80 % en mole du composant diisocyanate est formé de diisocyanate de 1,6-hexane, et 20 à 50 % en mole d'un ou deux diisocyanate(s), formant chacun au moins 10 % en mole du composant diisocyanate et étant sélectionné(s) parmi le groupe constitué du diisocyanate de toluylène, diisocyanate de diphénylméthane, diisocyanate de dicyclohexylméthane, diisocyanate d'isophorone, diisocyanate de triméthylhexane, diisocyanate de cyclohexane, diisocyanate de cyclohexanediméthylène, et du diisocyanate de tétraméthylènexylylène, dans lesquelles le % en mole des diisocyanates respectifs s'additionne jusqu'à 100 % en mole, dans lesquelles 20 à 100 % en mole du composant diol est formé d'au moins un alpha,oméga diol en C2-C12 linéaire aliphatique, et de 0 à 80 % en mole d'au moins un diol qui est différent des alpha,oméga diols en C2-C12 linéaires aliphatiques, dans lesquelles le % en mole des diols respectifs s'additionne jusqu'à atteindre 100 % en mole.

11. Compositions de revêtement selon l'une quelconque des revendications 1 à 8, dans lesquelles la au moins une résine B de polyuréthane est un polyisocyanate de polyuréthane qui peut être préparé par la réaction d'un trimère d'un diisocyanate (cyclo)aliphatique, d'un 1,6-hexanediisocyanate et d'un composant diol sous le rapport molaire 1:x:x, dans lesquelles x signifie n'importe quelle valeur souhaitée de 1 à 6, dans lesquelles le composant diol est un unique alpha,oméga diol en C2-C12 linéaire aliphatique ou une combinaison de deux à ou quatre diols (cyclo)aliphatiques, dans lesquelles dans le cas de la combinaison de diols, chacun des diols constituent au moins 10 % en mole des diols de la combinaison de diols et la combinaison de diols est constituée d'au moins 80 % en mole d'au moins un alpha,oméga diol en C2-C12 linéaire aliphatique.

12. Procédé de préparation d'une couche de revêtement, comprenant les étapes successives:
1) d'application d'une couche de revêtement à partir d'une composition de revêtement selon l'une quelconque des revendications précédentes,
2) optionnellement, la vaporisation de la couche de revêtement appliquée pour retirer le solvant, et
3) le durcissement thermique de la couche de revêtement à une température de l'objet située au-dessus de la température de fusion de la au moins une résine B de polyuréthane.

13. Procédé selon revendication 12, dans lequel la couche de revêtement est sélectionnée parmi le groupe constitué d'une couche de revêtement unique et d'une couche de revêtement au sein d'un revêtement multicouche.

14. Procédé selon la revendication 13, dans lequel la couche de revêtement au sein du revêtement multicouche est un revêtement multicouche automobile sur un substrat sélectionné parmi le groupe constitué des carrosseries automobiles et des pièces de carrosserie automobile.

15. Procédé selon la revendication 14, dans lequel la couche de revêtement est sélectionnée parmi le groupe constitué d'une couche d'apprêt surfaçant, d'une couche de revêtement de finition claire externe et d'une couche hermétique transparente.
